# EUROPEAN PATENT APPLICATION

(11) **EP 3 770 203 A1**
(43) Date of publication of application: **27.01.2021**
(21) Application number: 19188022.8
(22) Date of filing: 24.07.2019
(51) Int. Cl.: C08G 77/388, B29C 33/64

(54) **SILICONE AMIDE COMPOUNDS AS INTERNAL LUBRICANTS FOR HIGH-TEMPERATURE PLASTIC PROCESSING**

(71) Applicant: Clariant International Ltd, 4132 Muttenz (CH)
(72) Inventor: SINGH, Rekha, Thane-400605 Maharashtra (IN); PANDEY, Someshwarnath Dinanath, Thane-421503 Maharashtra (IN); YAGNESWARAN, Sriram, MH-400080 Mulund West (IN)
(74) Representative: Kampen, Daniela

(57) **Abstract**

The present invention relates to the silicone amide compound of Formula I having high-thermal stability (≥ 300 °C), good flowability at high temperature and demolding properties in the processing of HPPs.

## Description

### FIELD OF THE INVENTION

The present invention relates to silicone amide compounds. More particularly, the present invention relates to structural fine-tuning of said silicone amide compounds for their application as internal lubricant in the processing of high-performance plastic (HPP). The thermal stability of these compounds when used as internal lubricants is better than the commercially available fatty amides and silicone esters, therefore a suitable candidate for this application. Moreover, in the present compounds the silicone and olefinic chain length and the total molecular weight were fine-tuned to achieve the high-thermal stability (≥ 300 °C), good flowability at high temperature and demolding properties in the processing of HPPs. This invention is an effort to overcome the drawbacks of the previously known internal lubricants.

### BACKGROUND OF THE INVENTION

Lubricant is often encountered to describe certain additives incorporated into plastics materials. There are, however, various types of lubricants with varying functions, and it is important to distinguish between them. In particular lubricants are materials, which reduce the friction of moldings and other finished products when these are rubbed against adjacent materials which may or may not be of the same composition. The most well-known examples here are graphite and molybdenum disulfide added in quantities of the order of 1-2% in polyamides and other thermoplastics used in gear and bearing applications.

Materials which during processing exude from the polymer composition to the interface between the molten polymer and the metal surfaces of the processing equipment with which they are in contact. The resultant thin film layer then helps to prevent the plastics composition from sticking to the machinery and thus in the normal way facilitates processing. Such materials, known commonly as external lubricants, have a low compatibility with the polymer and in addition often possess polar groups to enhance their affinity to metals. The choice of lubricant will depend not only on the type of polymer, but also on processing temperatures involved. For PVC typical external lubricants are fatty acid, mainly stearic acid and its calcium and barium salts, hydrocarbons such as paraffin wax and low molar mass polythene, and certain esters.

The choice of lubricant for a particular composition and process can be quite critical but beyond stating that such materials will normally be fluid at processing temperature and should have a solubility parameter at least 3 MPa^{1/2} different from the polymer, little further fundamental guidance can be given and selection is normally made by an empirical trial and error basis.

The third group of lubricants comprises low molar mass materials which promote the flow of the polymer in the melt but which unlike plasticizers have little effect on the solid-state properties-the term internal lubricant has been applied here. Some external lubricants appear to function as internal lubricants, but for this function incompatibility is not a requirement and may be a disadvantage. Among internal lubricants used for PVC are amine waxes, Montan wax ester derivatives, glyceryl esters such as glyceryl monostearate, and long-chain esters such as cetyl palmitate. As with external lubricants the choice and amount of lubricant can be highly critical and tests on laboratory-scale equipment may well not reflect behavior on full-scale plant. It has been seen that internal lubricants are essentially low molar mass flow promoters which, unlike plasticizers, have little effect on the finished polymer (Professor Sahar Al-Malaika, et al, Professor Marianne Gilbert, in Brydson's Plastics Materials (Eighth Edition), 2017).

Accordingly, lubricants, either as integral parts of molding powders (internal lubricant) or as a coating on the molding surfaces (external lubricant), play an important role in the plastic processing. The advantage of internal lubricants over the external lubricants is that they minimize the time and energy required in plastic processing by reducing the melt viscosity, facilitate the mold filling and allow the smooth removal of the molded articles. Therefore, they not only reduce the friction between the mold and polymer interface but also with in the polymer melt itself. The processing temperature range and melt viscosity vary according to the type of polymer being processed. Commodity plastics require generally low temperature (100-250 °C) for their processing e.g. Polyolefins, PVC, polystyrene, polyurethane etc. For engineering plastic this range slightly shifts to -280-290 °C with a slight difficulty in the melt flow due to the intramolecular frictions. The high-performance plastics (HPPs) essentially require flow modifier and internal lubricants due to their extremely high viscosity during high thermal processing (300-360 °C). Besides acting as a flow modifier (internal lubrication at high temperature), the mold release (demolding) is also desirable at the end when the melt reaches to the mold (kept under lower temperature) and article is taken out from the molding machine. Therefore, the lubricant should have a balance between the compatibility (mixing) and non-compatibility (migration) with the polymer matrix for this application besides having a high thermal stability.

Fatty acids and their metal soaps (e.g. calcium montanate, zinc stearate), fatty esters (e. g. glycerol monostearate), fatty amides (e.g. ethylene bis-stearamide, stearyl erucamide), hydrocarbon waxes etc. are well known classes of internal lubricants for plastic processing. However, these waxes work best below 300 °C temperature due to their oxidative degradation by air above this temperature. For high temperature applications, silicone and fluoro-based lubricants are known either as external lubricant or as a reactive internal lubricants. The reactive internal lubricant is not always a choice when the mechanical properties of the polymer are of huge concern. Therefore, there is a need for a solid, non-reactive thermally stable alternate internal lubricants for high-performance plastics, namely, HTN (high tenacity nylon), LCP (liquid crystalline polymer), PPS (polyphenylene sulfide) and PEEK (polyether ether ketone), that can withstand the processing temperature of ≥ 300 °C.

The document US 4,409,351 discloses internal mold release agents based on saturated or unsaturated fatty acid having from about 14 to about 36 carbon atoms for various thermoplastic resins e. g. PE, PP, Nylon, polycarbonate, polysulfone, polyethersulfone, polysulfide or polyacrylate.

The document US 4,408,000 discloses a composition comprising a thermoplastic resin, a mold release agent and a mold release enhancing amount of a fatty acid.

The document US 4,119,603 A discloses the application of amides as additives (plasticizer) in improving the processing of polycarbonates, e. g. lauryl amide, stearyl amide and ethylene bis stearamide. These amides reduce the melt viscosity to a significant extent even at very high temperature and polycarbonates do not become brittle or degraded upon molding and thus retains its characteristic high impact strength.

The document US3274144 A discloses polycarbonate resin compositions comprising polycarbonate plastic and small amount of an amide where said composition exhibits improved characteristics (i.e reduced melt viscosity).

The document EP 0 891 183 B1 discloses the synthesis and application of silicone polyamide solid waxes as a thickening agent in cosmetics. Silicone modified polyamides are compatible to the silicone oils which is a basic ingredient of the gel. However, there is no information or study on the thermal stability and rheology of these silicone polyamides.

The document US 7,157,543 discloses the synthesis and application of silicone amide based external release agents having thermal stability of at least 150 °C. The preferred molecular weight range of silicone used by them is 6000-80,000. These silicone amide waxes were mixed with high viscosity silicone fluid and applied as a coating on the toner fuser membrane.

The document US 2003/232945 discloses a molecular complex for application to fuser members in toner fusing systems. The complex is formed from molecules with complementary acid and base functional groups. These groups interact to provide a noncovalent bond having a bond energy of about 20 kJ/mol or more.

The Japanese application JP 2010/100755 discloses the synthesis and application of silicone amide based release agent for an epoxy resin composition for sealing semiconductor, and semiconductor devices. These release agents were used in the temperature range 120-250 °C. They used α-aminomethyl silicone as a reactive polysiloxane for the synthesis of amide with fatty acid.

The Japanese application JP 2008/291249 discloses epoxy resin composition for semiconductor sealing comprising an epoxy resin, a hardener, an inorganic filler, and a reaction product of a fatty acid and an amino group-containing polysiloxane.

The prior art is focused on fatty acids and their metal soaps (e.g. calcium montanate, zinc stearate), fatty esters (e.g. glycerol monostearate), fatty amides (e.g. ethylene bis-stearamide, stearyl erucamide), hydrocarbon waxes etc. as internal lubricants for plastic processing technologies. However, these lubricants are not thermally stable. Therefore, there exists a dire need to provide an internal lubricant which can show high thermal stability of ≥ 300 °C.

### OBJECTS OF THE INVENTION

One objective of the present invention is to provide a lubricant which can show improved thermal stability, such as silicone amide compound of Formula I.

Another objective of the present invention is to provide lubricants, such as structurally modified silicone amide compounds, for their application as internal lubricant in the processing of high-performance plastic (HPP).

Still another objective of the present invention is to provide lubricants, such as silicone amide compounds, which exhibit high-thermal stability, good flowability at high temperature and good demolding properties.

Yet another objective of the present invention is to provide compounds (e.g. lubricants) which at 300 °C exhibit weight loss of ≤ 10-15% in 10-30 minutes.

### SUMMARY OF THE INVENTION

In an embodiment, the present invention provides silicone amide compound of Formula I: 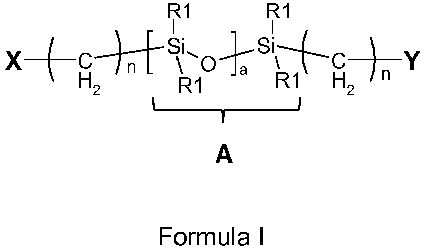
wherein R1 represents C₁₋₂ alkyl groups or aryl moiety;
a extends from 3 to 40 units
silicone block A extends from 4 to 41 units;
n = 1 to 3;
X and Y independently represent; -NHR2 or 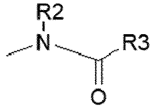
   wherein R2 = -H or -CH₃ or C₂H_{5;} and
   R3 represent aliphatic C₈₋₃₀, or C₇₋₁₅ aralkyl groups,
with the proviso that at least one of X and Y is 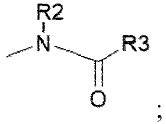
wherein the molecular weight of the silicone amide compound is less than 3000 Da;
and the ratio of silicon to carbon is in the range of 1: 22 to 1:1.

In another embodiment of the invention, the silicone amide compound may be di-block polymer namely H-S-W or tri-block polymer namely, W1-S-W1 or W1-S-W2 and any mixtures thereof, wherein H is hydrogen, S is a aminosilicone section -R2N-(CH2)n-A-(CH2)n-NR2-, and W, W1 and W2 are hydrocarbon sections -(C=O)R3, wherein W1 and W2 are different, and wherein all residues and indices are as defined above.

In another embodiment of the present invention, the ratio of silicon to carbon is 1:5.

In yet another embodiment of the present invention, the ratio of silicon to carbon is 1:1.

In another embodiment of the present invention, the weight ratio of silicone to hydrocarbon is 1:1.

In another embodiment of the present invention, the weight ratio of silicone to hydrocarbon is 5:1.

In yet another embodiment of the present invention, said compounds exhibit thermal stability at a temperature in the range of 250 °C - 400 °C both in nitrogen and air atmosphere.

In another embodiment of the present invention, said compounds exhibit weight loss of ≤ 5 % in 30 min. at 300 °C in air atmosphere.

In further embodiment of the present invention, said compounds are used as internal lubricant in the processing of high-performance plastic.

### BRIEF DESCRIPTION OF FIGURES

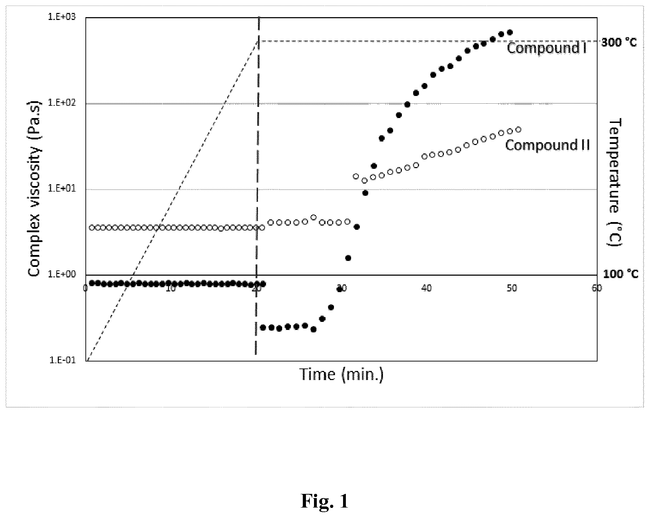

Figure 1 shows thermorheology plot for silicone amide compound I (according to Example 1) and compound II (according to Example 2) at 300 °C temperature.

### DETAILED DESCRIPTION OF THE INVENTION

The invention will now be described in detail in connection with certain preferred and optional embodiments, so that various aspects thereof may be more fully understood and appreciated.

As used herein, the singular forms "a," "an," and "the" include plural references unless the content clearly dictates otherwise.

As used herein, the terms "high-performance plastics" or "high-performance polymers" (HPP) refer to those polymers that are thermally stable at processing temperatures of ≥ 300 °C and/or operable at a continuous service temperature (CST) that is higher than 150 °C. Example HPPs include polysulfones (PS), polyphenylene sulfides (PPS), polyetherimides (PEI), polyether ether ketones (PEEK), high tenacity nylon (HTN) and liquid crystalline polymer (LCP).

In an aspect, the present invention provides silicone amide compound of Formula I: 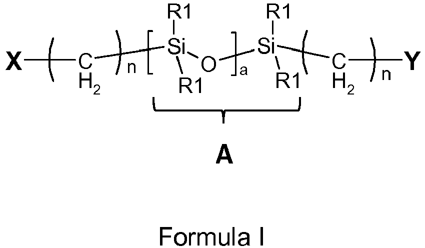
wherein R1 represents C₁₋₂ alkyl groups or aryl moiety;
a extends from 3 to 40 units;
silicone block A extends from 4 to 41 units;
n = 1 to 3;
X and Y independently represent; -NHR2 or 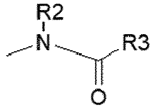
   wherein R2 = -H or -CH₃ or C₂H_{5;} and
   R3 represent aliphatic C₈₋₃₀, or C₇₋₁₅ aralkyl groups;
with the proviso that at least one of X and Y is 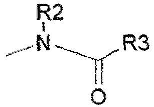
wherein the molecular weight of the silicone amide compound is less than 3000 Da;
and the ratio of silicon to carbon is in the range of 1: 22 to 1:1.

In another embodiment of the invention, the silicone amide compound may be di-block polymer namely H-S-W or tri-block polymer namely, W1-S-W1 or W1-S-W2 and any mixtures thereof, wherein H is hydrogen, S is a aminosilicone section -R2N-(CH2)n-A-(CH2)n-NR2-, and W, W1 and W2 are hydrocarbon sections -(C=O)R3, wherein W1 and W2 are different, and wherein all residues and indices are as defined above.

In another aspect of the present invention, the ratio of silicon to carbon is 1:5.

In yet another aspect of the present invention, the ratio of silicon to carbon is 1:1.

In one another aspect of the present invention, the weight ratio of silicone to hydrocarbon is 1:1.

In another aspect of the present invention, the weight ratio of silicone to hydrocarbon is 5:1.

In yet another aspect of the present invention, said compounds exhibit thermal stability at a temperature in the range of 250 °C - 400 °C both in nitrogen and air atmosphere.

In another aspect of the present invention, said compounds exhibit weight loss of ≤ 5 % in 30 min. at 300 °C in air atmosphere.

In further aspect of the present invention, said compounds are used as internal lubricant in the processing of high-performance plastics (HPP).

In yet another aspect of the present invention, the desired properties of the lubricant used in the processing of HPPs, i.e. HTN (high tenacity nylon), LCP (liquid crystalline polymer), PPS (polyphenylene sulfides), PEEK polyether ether ketones) etc. are;
- Good thermal stability - in the range of 250 to 400 °C both in nitrogen and air atmosphere (weight loss ≤ 10-15 % in 10-30 min.).
- Internal lubrication - It reduces the overall viscosity and melt flow of the matrix polymer during processing. Lowering the frictions with the wall during processing. Lubricants should be moderately compatible with the polymer matrix and must not show any significant crosslinking during the heating process.
- Mold release - molecules should be able to migrate towards surface and facilitate in the demolding of articles from the mold (temperature lower than that during melt processing).

In another aspect, the present invention is directed to the structural modification, synthesis and application of silicone amide-based lubricant for the internal lubrication and mold release of HPPs during their high temperature processing. The internal lubricant of the present invention (in particular the silicone amide compound of Formula I) is added in the range of 0.5% to 20 % by weight during the processing of HPPs to improve the melt flow.

In another aspect of the present invention, the polysiloxane molecular weight (MW) is in the range of 200-2850 Da.

In yet another aspect of the present invention, the hydrocarbon molecular weight (MW) is in the range of 140-450 Da.

In another aspect, the silicone amide compound of the present invention can be prepared by condensation reaction between suitable aminosilicone component and suitable hydrocarbon component.

Suitable aminosilicone components include bis(3-aminopropyl) terminated poly(dimethylsiloxane), bis(2-aminoethyl) terminated poly(dimethylsiloxane) or bis(aminomethyl) terminated poly(dimethylsiloxane). Further, suitable aminosilicone components include compounds of the general structure (II); 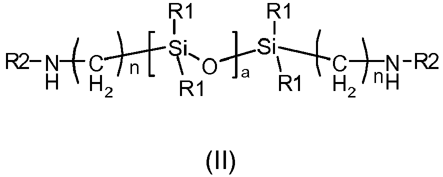
wherein R1 represent C₁₋₂ alkyl groups or aryl moiety;
a extends from 3 to 40 units;
n = 1 to 3;
R2= -H, -CH₃, -C₂H₅

These aminosilicone components for the synthesis of silicone amide compounds are used in the range of 60-90% by weight to total weight of reaction components.

Suitable hydrocarbon component includes hydrocarbon acids, hydrocarbon acid esters and hydrocarbon acid chloride having a general structure of (III); 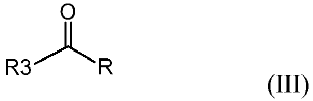
wherein R3 represent aliphatic C₈₋₃₀, or C₇₋₁₅ aralkyl groups, and
R is -CI or -OR' and wherein R' is H, -CH₃ or -C₂H_{5.}

Preferably, suitable hydrocarbon component includes fatty acids, fatty acid esters and fatty acid chloride having a general structure of (IV); 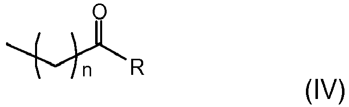
wherein, n extends from 8-30, and
R is -Cl or -OR' and wherein R' is H, -CH₃ or -C₂H_{5.}

The hydrocarbon component for the synthesis of silicone amide compounds are used in the range of 10 to 40% by weight, based on the total weight of reaction components.

Silicones are often considered as the most preferred candidate as lubricant in view of their interesting properties e.g. low surface energy, high thermal stability and low viscosities. Silicone based mould release agents are mainly known as an external lubricant applied directly on the mould surface due to their liquid state. As an internal release agent, the silicone-based release agents have been used in the reaction processing wherein they itself reacts with the matrix polymer and becomes an integral part. However, the compatibility of silicone alone with the matrix polymer is an issue. There are silicone modifications known to make them solid and compatible with the other polymers.

Amino-functional silicone compounds are well known for their different applications in diverse fields e.g. as plasticizers in the textile industry, as thickeners or in the cosmetic industry, softening substances in the textile industry etc.

Inventive silicone amide compounds can function as an ideal internal lubricant for HPPs by fine-tuning the amount of silicone component relative to hydrocarbon component. It was surprisingly found that a suitable silicon (in aminosilicone component) to carbon (in hydrocarbon component) ratio is critical for getting a final product having good thermal stability, suitable physical form such as a solid and/or compatibility with HPP for use as an internal lubricant. It is observed that higher Si/C ratio results in good thermal stability but this may be offset by product being undesirable liquid or semi-solid form and the final product may be incompatible with matrix polymer.

The reaction can be carried out in a one-pot, single-step process wherein the aminosilicone component reacts with the hydrocarbon component in the required proportion in the melt phase at a temperature range from 100-150 °C under continuous flow of nitrogen. The completion of reaction can be monitored by disappearance of acid peak in FTIR (∼1710 cm⁻¹) and the acid value measurement. Typically, it takes about 4 to 6 hours for completion of the reaction.

Optionally, the condensation reaction between aminosilicone component and hydrocarbon component may be carried out in presence of a catalyst. However, for reactions between a hydrocarbon component containing an acid group and the aminosilicone component containing an amine group, catalysts are not required. Example catalysts include triethylamine in case of -COCI reaction with -NHR; Dibutyltin dilaurate (DBTL) and/or Tin (II) octanoate for -COOH reaction with -NHR; PTSA (p-toluenesulfonic acid) and sulphuric acid, phosphoric acid for reactions between ester and NHR.

In one another aspect of the present invention, the preparation of silicone amide compound is a solvent free process.

In yet another aspect the preparation of silicone amide compound is in presence of a solvent. For example, in case of -COCI reaction with -NH₂ solvents may be used. Example of solvents include THF (tetrahydrofuran), toluene, xylene, DCM (dichlormethane) and any mixtures thereof.

In further aspect of the present invention, the ratio of aminosilicone component and hydrocarbon component is modified so that the amount of unreacted hydrocarbons in the final product is minimal. Excess of unreacted hydrocarbon leads to decrease in the thermal stability of the silicone amide compound. In one aspect, the ratio of NHR2 (in the aminosilicone component) to COR (in the hydrocarbon component) in the reacting components/component concentration is 0 ≥1. The product prepared can be used as such. In certain cases where solvents and or catalysts have been employed during the preparation process, the silicone amide compound may be further purified.

The silicone amide compound prepared using the embodiments of the present invention may be used as an internal lubricant additive. In this aspect, the present invention is directed to the use of a silicone amide compound according to Formula (I) as defined above as an internal lubricant in the processing of high-performance plastic.

Further, the present invention is directed to a polymer composition comprising at least one matrix polymer and an internal lubricant, wherein the internal lubricant is a silicone amide compound of Formula I as defined above.

In one embodiment, the silicone amide compound is added to a matrix polymer in an amount of from about 0.5 to about 20 % by weight, based on the total weight of the polymer composition, to form a polymer composition. Suitable matrix polymer includes high-performance polymers or any blends thereof.

The polymer composition may further include other additives to improve or enhance the function, or processing or effect substances. Non-limiting examples of other additives include UV absorbers, light stabilizers based on sterically hindered amines, flame retardants, quenchers, antioxidants, pigments, acid scavengers, fillers, ignition resistant additives, antioxidants, photostablizers, coloring substances, antistatic agents, dispersing agents, copper inhibitors, nucleating agents, plasticizers, emulsifiers, optical brighteners, catalysts, slip agents, crosslinking agents, crosslinking boosters, halogen scavengers, smoke inhibitors, clarifiers or blowing agents. If used, such other additives may be present in an amount ranging from about 0.01 to about 25 % by weight, preferably from about 0.1 to about 20 % by weight, more preferably from about 1 to about 15 % by weight, more preferably from about 2 to about 12 % by weight, and most preferably from about 5 to about 10 % by weight, based on the total weight of the polymer composition.

### EXAMPLES

The following examples are given by way of illustration only and therefore, should not be construed to limit the scope of the present invention.

### Example 1

Preparation of silicone amide compound I: About 25 grams (g) of bis(3-aminopropyl) terminated Poly(dimethylsiloxane) (MW ∼ 900) was taken in a round-bottomed flask equipped with an over-head stirrer and a condenser. Around 19 g of behenic acid was mixed to this and heated at 150 °C under nitrogen atmosphere. The water formed by condensation was removed by applying slight vacuum. The reaction was stopped when acid value reached to < 1 to form silicone amide compound I. The compound I has silicon to carbon ratio of 1:5 and weight ratio of silicone to hydrocarbon of compound I is 1:1.

### Isothermal thermogravimetric analysis

Thermogravimetric analysis was conducted using PerkinElmer instrument under air on a sample of silicone amide compound I. The analysis was performed in isothermal mode with an initial temperature ramp of 20 °C/min. to reach the desired temperatures of 300 °C, 320 °C and 360 °C. The desired temperature was kept on hold for 30 minutes and the weight loss was monitored with respect to time.

Compound I exhibited a weight loss of 3.8 %, 32 % and 58 % in 30 minutes at 300 °C, 320 °C and 360°C, respectively.

### Thermorheology

To evaluate the performance of silicone amide compound as flow modifier, the rheological behaviour at high temperature was studied. The complex viscosity of compound I was studied as a function of time at 300 °C in air for 30 minutes time. The viscosity of compound I remained low and constant for about 10-15 minutes after reaching 300 °C temperature. After that a steep and continuous rise in viscosity was observed as shown in Figure 1.

### Example 2

Preparation of silicone amide compound II: About 28 g of bis(3-aminopropyl) terminated Poly(dimethylsiloxane) (MW ∼ 2800) was taken in a round-bottomed flask equipped with an over-head stirrer and a condenser. Around 5 grams of behenic acid was mixed with this and heated at 150 °C under nitrogen atmosphere. The water formed by condensation was removed by applying slight vacuum. The reaction was stopped when acid value reached to < 1 to form silicone amide compound II. The compound II has silicon to carbon ratio of 1:1 and weight ratio of silicone to hydrocarbon of compound II is 5:1.

### Isothermal thermogravimetric analysis

Thermogravimetric analysis was conducted using PerkinElmer instrument as described in Example 1. Compound II exhibited a weight loss of 3 %, 13 % and 16 % in 30 minutes at 300 °C, 320 °C and 360°C, respectively. As observed, compound II displayed better TGA performance than compound I indicating that higher silicon to carbon ratio resulted in better thermal stability.

### Thermorheology

The complex viscosity of compound II was studied as a function of time at 300 °C in air for 30 minutes time. The viscosity of compound II remained low and constant for about 10-15 minutes after reaching 300 °C temperature. After that a rise in viscosity was observed as shown in Figure 1. Both compounds I and II worked very well for 10 to 15 minutes at 300 °C which is typically the processing time for many of the HPPs thus demonstrating the use of these compounds as processing aid for HPPs.

Although the invention has been described with reference to particular means, materials, and embodiments, it should be noted that the invention is not limited to the particulars disclosed, and extends to all equivalents within the scope of the claims.

## Claims

1. A silicone amide compound of Formula I: 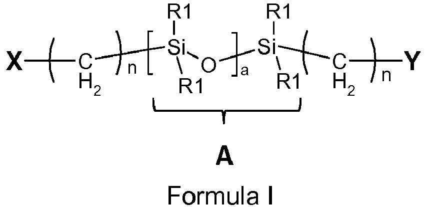
wherein R1 represents C₁₋₂ alkyl groups or aryl moiety;
a extends from 3 to 40 units;
silicone block A extends from 4 to 41 units;
n = 1 to 3;
X and Y independently represent; -NHR2 or 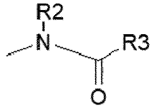
wherein R2 = -H or -CH₃ or C₂H_{5;} and
R3 represent aliphatic C₈₋₃₀, or C₇₋₁₅ aralkyl groups;
with the proviso that at least one of X and Y is 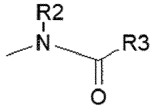
wherein the molecular weight of the silicone amide compound is less than 3000 Da;
and the ratio of silicon to carbon is in the range of 1: 22 to 1:1.

2. The silicone amide compound as claimed in claim 1, wherein the ratio of silicon to carbon is 1:5.

3. The silicone amide compound as claimed in claim 1, wherein the ratio of silicon to carbon is 1:1.

4. The silicone amide compound as claimed in claim 1, wherein the weight ratio of silicone to hydrocarbon is 1:1.

5. The silicone amide compound as claimed in claim 1, wherein the weight ratio of silicone to hydrocarbon is 5:1.

6. The silicone amide compound as claimed in any of claims 1 to 5, wherein said compounds exhibit thermal stability at a temperature in the range of 250 °C - 400 °C both in nitrogen and air atmosphere.

7. The silicone amide compound as claimed in any of claims 1 to 6, wherein said compounds exhibit weight loss of ≤ 5 % in 30 minutes at 300 °C in air atmosphere.

8. Use of a silicone amide compound as claimed in any of claims 1 to 7 as an internal lubricant in the processing of high-performance plastic.

9. A polymer composition comprising at least one matrix polymer and an internal lubricant, wherein the internal lubricant is a silicone amide compound of Formula I. 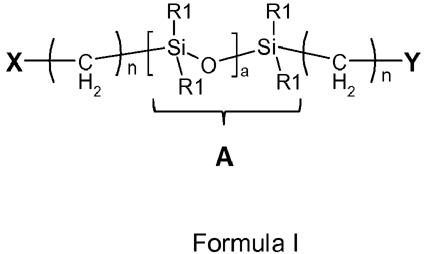
wherein R1 represents C₁₋₂ alkyl groups or aryl moiety;
a extends from 3 to 40 units;
silicone block A extends from 4 to 41 units;
n = 1 to 3;
X and Y independently represent; -NHR2 or 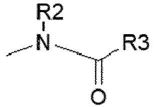
wherein R2 = -H or -CH₃ or C₂H_{5;} and
R3 represent aliphatic C₈₋₃₀, or C₇₋₁₅ aralkyl groups;
with the proviso that at least one of X and Y is 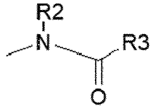
wherein the molecular weight of the compound is less than 3000 Da;
and the ratio of silicon to carbon is in the range of 1: 22 to 1:1.

10. The polymer composition of claim 9, wherein the matrix polymer is a high-performance polymer or any blends thereof.

11. The polymer composition of claim 9 or 10, wherein the internal lubricant is present in an amount of from about 0.5 weight percent to about 20 weight percent, based on the total weight of the polymer composition.
